# EUROPEAN PATENT APPLICATION

(11) **EP 4 344 862 A1**
(43) Date of publication of application: **03.04.2024**
(21) Application number: 22306455.1
(22) Date of filing: 30.09.2022
(51) Int. Cl.: B29D 11/00, B29C 64/129

(54) **METHOD FOR ADDITIVELY MANUFACTURING AN OPHTHALMIC DEVICE AND MANUFACTURING SYSTEM CONFIGURED TO CARRY OUT SUCH A METHOD**

(71) Applicant: Essilor International, 94220 Charenton-Le-Pont (FR)
(72) Inventor: LEITE, Pierre, 91650 BREUILLET (FR)
(74) Representative: Santarelli

(57) **Abstract**

The disclosure provides a method for additively manufacturing an ophthalmic device (2), comprising additively manufacturing a plurality of layers (3) of a predetermined material in order to obtain the ophthalmic device, each layer being manufactured by projecting and polymerizing at least one image on a surface of a volume of the predetermined material, a first face (50) being directed downwards and a second face (55) being directed upwards; wherein, for at least two successive layers, the method comprises a step of forming at least one image permitting to cure a predetermined thickness of material on the side of the second face directed upwards and another thickness of material on the side of the first face directed downwards,.

## Description

### FIELD OF THE DISCLOSURE

The disclosure relates to a method for additively manufacturing an ophthalmic device and a manufacturing system configured to carry out such a method.

### BACKGROUND ART

Known methods for additively manufacturing ophthalmic lenses comprise curing steps and layering steps which are performed successively in a manufacturing system which comprises a curing device, a layering device and a building platform located in relation to a vat filled with a predetermined material. In this configuration, the top of the manufacturing system corresponds to the location of the curing device while the bottom of the manufacturing system corresponds to the opposite side relative to the building platform.

For instance, each ophthalmic lens is built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a new liquid layer on the previous hardened layer of the plurality of ophthalmic lenses to be manufactured.

International application WO2015004383A1 discloses a method for additively manufacturing an optical article, comprising a step of providing a starting optical system and a step of additively manufacturing layer by layer a complementary optical element on the starting optical element, which can be in an inclined position.

International application WO2015086981A1 discloses a method for additively manufacturing an optical article layer by layer, comprising the step of additively manufacturing an intermediate optical element in a manner such that the intermediate optical element is inclined relative to a predetermined additive construction axis referred to as a stratification axis along which a plurality of predetermined volume elements of at least one material is deposited so as to enable a polishing step in a specific zone.

International application WO2018235209A1 discloses a method for additively manufacturing an optical article layer by layer from a light-curable resin, using a micro mirror device, e.g. a DMD (Digital Micro mirror Device), for generating a desired shape light flux for irradiating the light-curable resin. The micro mirror device has a plurality of micro mirrors arranged in two-dimensional repetition structure. In the process of using DMD for light-curing the resin, in a projected region of the light-curable resin, an intensity of the projected light in a portion corresponding to an area of the micro mirror itself is different from that in a portion corresponding to an area between adjacent micro mirrors.

### SUMMARY OF THE DISCLOSURE

The disclosure is directed to a method for additively manufacturing an ophthalmic device which is simple and convenient to carry out.

The disclosure accordingly provides a method for additively manufacturing an ophthalmic device having a first face, a second face opposite to the first face and an outline joining the first face and the second face, the method comprising a step of additively manufacturing a plurality of layers of a predetermined material in order to obtain the ophthalmic device, each layer being manufactured by projecting and polymerizing at least one image on a surface of a volume of the predetermined material, the first face being directed downwards and the second face being directed upwards; wherein, for at least two successive layers, the method comprises a step of forming at least one image permitting to cure a predetermined thickness of material on the side of the second face directed upwards and another thickness of material on the side of the first face directed downwards.

Thanks to the method according to the disclosure, it is possible to additively manufacture an ophthalmic device with a first resolution on the second face being directed upwards and with a second resolution on the first face being directed downwards, the second resolution being higher than the first resolution.

The first face directed downwards means that the first face is directed to the bottom of the manufacturing system and can thus be called downskin, whereas the second face directed upwards means that the second face is directed to the top of the manufacturing system and can thus be called upskin.

In an embodiment, this method is carried out with no change of orientation of the ophthalmic device during the additive manufacturing, an with no change in resolution as such during the method.

Indeed, thanks to the method according to the disclosure, the material does not receive the same quantity of energy on an upskin part compared to a downskin part, and in this method, a sufficient quantity of energy is provided on material which is or will be located at the junction of two successive layers on the second face directed upwards.

Thanks to the method according to the disclosure, at least a part of a sub-layer of material is formed substantially at a junction of the two successive layers on this side of the first face directed downwards.

In other words, the method according to the disclosure allows to create a sub-layer having a thickness lower than a thickness of the layer which is built.

The printing steps, or staircases, formed in the downskin side are smaller than a layer to layer thickness within the bulk of the material.

The ophthalmic device may be built vertically and in an inclined manner.

Due to the substantially vertical build, the resolution is the resolution in a stratification axis, not the so-called "in-plane" resolution which depends on the resolution of the curing method. In addition, the higher resolution means that the print steps are smaller.

In an embodiment, the method comprises a layering step for adding a volume of the predetermined material before each step of projecting and polymerizing at least one image on a surface of the added volume of the predetermined material.

During the layering step, the volume of the predetermined material is the same for each layer.

The step of additively manufacturing a plurality of layers of a predetermined material is made along a stratification axis which is vertical, and the ophthalmic device is built substantially vertically and comprises an optical axis which is distinct to the stratification axis.

The stratification axis is orthogonal to a production plane.

The optical axis may be inclined in a range comprised between around +10° and around +55° relative to the production plane.

The vertical build means that the ophthalmic device is not built along the thickness of the device, that is to say from one of the first face and second face to the other, but rather from along a diameter or a profile of the ophthalmic device.

The method comprises a step of additively manufacturing a support on which the ophthalmic device is built vertically and in an inclined manner.

The support can be formed in the same time with the ophthalmic device or beforehand.

The support may comprise a maintaining face which has a predetermined inclination relative to the stratification axis.

The method comprises a step of forming at least one image adapted to cure a predetermined thickness of material on the second face directed upwards and another thickness of material on the first face directed downwards, and a step of slicing one or a plurality of images.

The method comprises a step of forming at least one image adapted to cure a predetermined thickness of material on the second face directed upwards and another thickness of material on the first face directed downwards, and a step of deforming the sliced image or sliced images.

A plurality of sliced images are projected sequentially.

A so-called grayscale image is projected.

The method may comprise a step of varying the polymerization energy during curing.

The disclosure further provides a manufacturing system configured to carry out a method for additively manufacturing an ophthalmic device having a first face, a second face opposite to the first face and an outline joining the first face and the second face, additively manufacturing a plurality of layers of a predetermined material in order to obtain the ophthalmic device, each layer being manufactured by projecting and polymerizing at least one image on a surface of a volume of the predetermined material, the first face being directed downwards and the second face being directed upwards; wherein the manufacturing system comprises a projecting and polymerizing apparatus configured for forming, for at least two successive layers, at least one image permitting to cure a predetermined thickness of material on the side of the second face directed upwards and another thickness of material on the side of the first face directed downwards.

The manufacturing system further comprises a layering device configured for adding a volume of the predetermined material before the projecting and polymerizing apparatus projects and polymerizes at least one image on a surface of the added volume of the predetermined material.

The projecting and polymerizing apparatus is formed by a digital light processing unit and/or a stereolithography unit including a laser source and a scanning head.

The system comprises a controller configured to form a plurality of sliced images and/or at least a so-called grayscale image and/or to vary a polymerization energy during curing.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for additively manufacturing ophthalmic devices.
Figure 2 is a block diagram showing steps of the method for additively manufacturing an ophthalmic device according to the disclosure.
Figure 3 shows an ophthalmic device.
Figure 4 shows schematically some steps of the additive manufacturing method according to a first embodiment.
Figure 5 shows schematically some steps of the additive manufacturing method according to a second embodiment.

### DETAILED DESCRIPTION OF EXAMPLE EMBODIMENTS

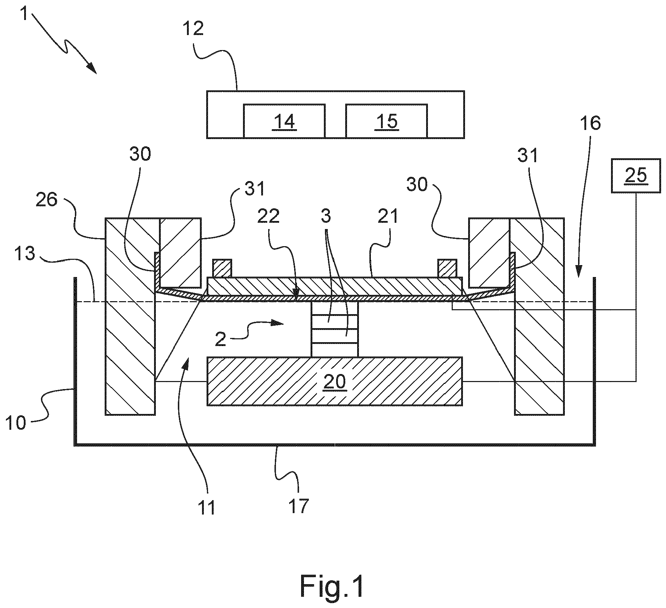

Figure 1 illustrates schematically a manufacturing system 1 configured to carry out a method for additively manufacturing ophthalmic devices 2.

The manufacturing system 1 comprises a tank 10 filled with a volume of a predetermined material 11 suitable for manufacturing ophthalmic devices 2, such as a liquid resin for making eyeglasses.

The manufacturing system 1 is an additive system configured for manufacturing the ophthalmic devices 2 layer by layer, each layer 3 being formed by a volume of the predetermined material 11 at least partially polymerized and hardened.

In this respect, the manufacturing system 1 comprises an unit 12 configured for projecting and polymerizing at least one image on a surface 13 of the volume of the predetermined material 11 in the tank 10, also called additive unit.

The additive unit 12 may comprise a processing apparatus 14 having for instance a digital lighting processor which is configured for processing a single image, or pattern, and/or a plurality of images, or patterns.

The additive unit 12 may further comprise a projecting and polymerizing apparatus 15 configured for providing a curing energy, and having for instance a projector and a radiation source, or energy source, or other well-known sources for projecting the single image in a single direction toward the material 11 for each layer 3, and/or a plurality of images projected simultaneously of successively, and then polymerizing and hardening the material 11.

In variant, the digital lighting processor and polymerizing apparatus are replaced by a laser source and a scanning device which are configured for scanning with the laser source the surface 13 of the material 11.

In Figure 1, the additive unit 12 is located on an upper side of the tank 10, and faces an upper opening 16 of the tank 10 which is opposite to a bottom 17 of the tank 10. Such arrangement allows carrying out a so-called top-down process, as explained below.

In another arrangement, the additive unit can be located on a lower side of the tank, and faces a supplemental opening formed on the bottom of the tank. Such another arrangement allows carrying out a so-called bottom-up process, as also explained below.

The manufacturing system 1 further comprises a building platform 20 at least partially immersed in the tank 10, a transparent plate 21 and a flexible separation film 22 represented in Figure 1 as being laid on the transparent plate 21 and being in contact therewith.

The flexible separation film 22 faces the building platform 20 and the transparent plate 21 faces the additive unit 12.

The flexible separation film 22 is mechanically connected by ends 31 to a frame 30 of the manufacturing system 1.

The transparent plate can be made from glass or plastic, while the flexible separation film can be made for instance from polytetrafluoroethylene (PTFE). In variants, the flexible separation film can be made for instance from Teflon AF such as for instance AF 2400 or AF 1600, or perfluoroelastomers (PFE), polypropylene (PP), polyethylene terephthalate (PET), perfluoroalkoxy (PFA), or also from silicone, etc..

The additive unit 12 is thus configured for projecting at least one image, or pattern, on the surface 13 of the volume of the predetermined material 11 in the tank 10 for forming each layer 3 of the ophthalmic device 2 on the building platform 20, through the transparent plate 21 and flexible separation film 22, so that each layer 3 which is formed and at least partially hardened is sandwiched between the building platform 20 and the flexible separation film 22.

In particular, the additive unit 12 is able to transfer to the surface of the volume of the predetermined material, in an image or a pattern, a quantity of energy suitable to trigger polymerization of the predetermined material.

The additive unit 12 comprises a controller configured to form a plurality of sliced images and/or at least a so-called grayscale image.

The controller of the additive unit 12 may also be configured to vary the energy during curing, also called polymerization energy.

The manufacturing system 1 further comprises a moving unit 25 configured to move at least one of the building platform 20, the transparent plate 21 and the frame 30 one relative to the others.

The building platform 20, the transparent plate 21 and the flexible separation film 22 are each mounted, directly or indirectly, on a rigid body 26, and can also be mounted movable relative to the rigid body 26.

The moving unit 25 may act on the building platform 20, or on the transparent plate 21, or on the frame 30 bearing partially the flexible separation film 22, or on both of them. The moving unit 25 may act on the building platform 20, the transparent plate 21 and the flexible separation film 22 dependently or independently.

In particular, the moving unit 25 may be configured to:
- raise up or down the building platform 20 towards or remote to a bottom 17 of the tank 10; and/or
- raise up or down the transparent plate 21 towards or remote to the bottom 17 of the tank 10 and thus towards or remote to the building platform 20; and/or
- raise up or down the frame 36 to which the flexible separation film 22 is mechanically connected, towards or remote to the bottom 17 of the tank 10 in order to locate at least a part of the flexible separation film 22 in a position relative to both building platform 20 and transparent plate 21.

In an alternative embodiment, the moving unit 25 may be configured to raise up or down the tank 10 relative to at least one of the building platform 20, transparent plate 21 and frame 30 to which the flexible separation film 22 is mechanically connected.

In another alternative embodiment, the apparatus is devoid of a membrane and rather comprises a recoater.

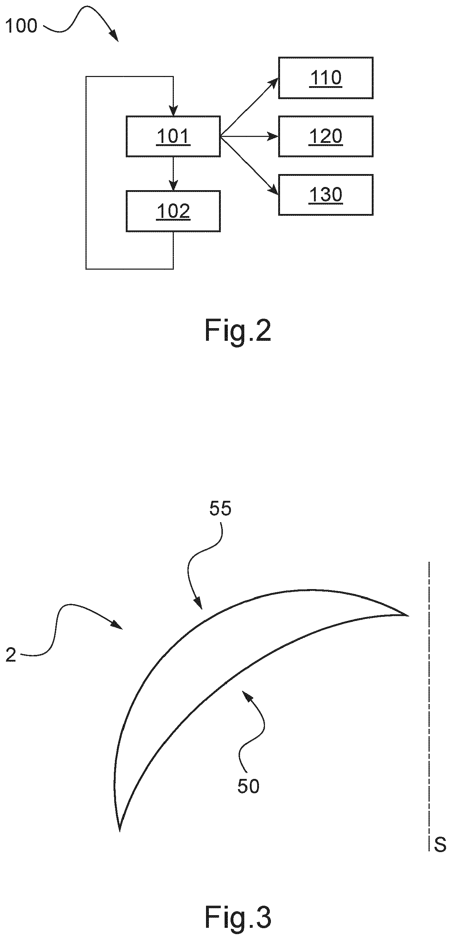

Figure 2 is a block diagram showing the main steps of the method for additively manufacturing ophthalmic devices 2 carried out thanks to the manufacturing system 1 as described above.

The method comprises successive steps 100 of additively manufacturing the plurality of layers 3 of the predetermined material 11, layer by layer.

The main steps of the method comprises iteratively steps of layering 101 and steps of curing 102 in order to form, layer by layer, the ophthalmic devices 2.

The steps of layering 101 are carried out for locating the parts of the manufacturing system, including at least the building platform 20, the transparent plate 21 and the flexible separation film 22, in a building position in which only a predetermined thickness of the predetermined material 11 is provided between the flexible separation film 22 and the building platform 20 or a layer already formed thereon. The predetermined thickness of the predetermined material 11 corresponds to the thickness of the layer, when cured, to be formed.

During the layering step, the volume of the predetermined material can be the same for each layer, or for at least two consecutive layers. In variant, the volume of the predetermined material can vary.

The steps of layering 101 may comprise the step 110 of moving the building platform 20 in a predetermined position, and/or the step 120 of moving the frame 30 to which the flexible separation film 22 is mechanically fastened, relative to the building platform 20, and/or the step 130 of moving the transparent plate 21 relative to the building platform 20 and/or relative to the frame 30 to which the flexible separation film 22 is mechanically fastened.

The curing steps 102 comprise the steps of projecting and polymerizing at least one image on the surface 13 of the volume of the predetermined material 11 in the tank 10, through the transparent plate 21 and the flexible separation film 22 laying on the transparent plate 21 and being in contact therewith.

The curing steps 102 encompass the projection of a single image in a single direction toward the material 11, for instance thanks to the projecting apparatus 14, or the projection of a plurality of images projected simultaneously of successively. Such a process is usually called DLP process.

In variant, the step of projecting an image encompasses the scanning by a laser source of the surface of the material. Such a process is usually called SLA process.

Each layer 3 of the ophthalmic device 2 is formed, or layered, and at least partially hardened by curing, on the building platform 20 or on a previous layer on this platform, in a location wherein the layer 3 is sandwiched between the building platform 20 or the previous layer and the flexible separation film 22.

Figure 3 shows the orientation of the ophthalmic device 2 during the build thereof. The ophthalmic device 2 is built vertically and in an inclined manner.

The ophthalmic device 2 to be manufactured has a first face 50 which is oriented downward and called downskin, a second face 55 opposite to the first face 50, which is oriented upward and called upskin, and an outline joining the first face 50 and the second face 55.

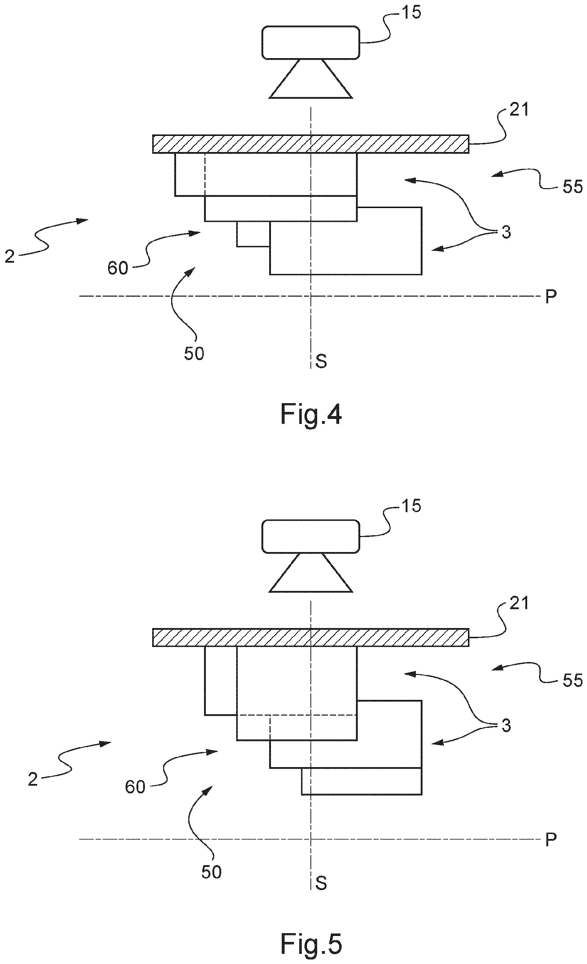

According to the disclosure and as shown on Figures 4 and 5, for at least two successive layers, at least one image permitting to cure a predetermined thickness of material on the second face 55 directed upwards and another thickness of material on the first face 50 directed downwards, such that at least a part of a sub-layer 60 of material is added at a junction of two successive layers 3 on the second face directed upwards 50.

To be noted that the another thickness is a different thickness than the predetermined thickness and can be an extra thickness or more generally a further thickness, which is higher or lower than the predetermined thickness

Additively manufacturing a plurality of layers of a predetermined material is here made along a stratification axis S which is vertical, and the ophthalmic device 2 can be built substantially vertically and comprises an optical axis (not represented) which is distinct to the stratification axis S.

The stratification axis S is orthogonal to a production plane P.

The optical axis may thus be inclined in a range comprised between around +10° and around +55° relative to the production plane P.

The vertical build means that the ophthalmic device 2 is not built in thickness, that is to say from one of the first face 50 and second face 55 to the other, but rather from along a diameter or a profile of the ophthalmic device 2.

A support (not shown) on which the ophthalmic device is built vertically and in an inclined manner can be additively manufactured, for instance at the same time with the ophthalmic device 2 or beforehand.

The support may comprise a maintaining face which has a predetermined inclination relative to the stratification axis.

The addition of the sub-layer 60 can be made according to different strategies.

The method may comprise a step of forming at least one image permitting to cure a predetermined thickness of material on the second face directed upwards and another thickness of material on the first face directed downwards, and a step of slicing one or a plurality of images.

In variant, the method may comprise a step of forming at least one image permitting to cure a predetermined thickness of material on the second face directed upwards and another thickness of material on the first face directed downwards, and a step of deforming the sliced image or sliced images.

A plurality of sliced images can be projected sequentially, or a so-called grayscale image can be projected (see in more detail below).

In addition, the method may comprise a step of varying the polymerization energy during curing. Such a step is for instance disclosed in WO2018235209A1.

For instance, in Figure 4, the sub-layer 60 is included in the current layer 3. At some points of the image which is projected, the curing energy is adapted so that the cured thickness is lower than the layer thickness. Graphically speaking, the image will have a "white portion" while the sub-layer will appear "gray". The sub-layer 60 is made overlapping the layers 3 below.

For instance, in Figure 5, the sub-layer 60 is included in the previous layer 3, that is to say the layer made at a previous step. At some points of the image which is projected, the curing energy is adapted so that the material which is cured corresponds to a thickness which is higher than the sum of the another thickness, also called overcure, and layer thickness. Graphically speaking, the image will be gray while the sub-layer will be for instance an extra light and will appear white.

Grayscale means to project images with possibly different levels of light intensity for each pixel of the apparatus.

A grayscale with two levels, for example white at 256/256 and gray at 128/256, can be used.

To create the image, one possibility is to define a first image by slicing at the regular slicing height (first dedicated pixels will be at 256) and a second image by slicing at an intermediate slicing height (second dedicated pixels will be at 128), and next to combine both images.

Another way to create sub-layers is to project different images with different light doses to reach different cured thickness, either sequentially or simultaneously with different projectors. To create the images, a sub-slicing can be made, like for the grayscale images.

In an embodiment, for the production of ophthalmic lenses vertically, the lens is tilted in a way that one side is totally in upskin and the other is totally in downskin.

The resolution can be chosen depending on the complexity of the part or on the level of details to be made. For ophthalmic lenses, complex designs such as progressive lenses require high resolution. More simple designs, such as single vision lenses, are less critical and require less resolution. In some cases, a progressive lens is composed of a rather simple front side (the convex side) and a complex back side including the customization of the lens. Therefore, there is not the same need in terms of resolution between the front side and the back side. The method according to the disclosure can be used to do that.

Thanks to the method according to the disclosure, it is thus possible to additively manufacture an ophthalmic device with a first resolution on the second face being directed upwards and with a second resolution on the first face being directed downwards, the second resolution being higher than the first resolution.

Due to the substantially vertical build, the resolution is the resolution in a stratification axis, not the so-called "in-plane" resolution. In addition, the higher resolution means that the print steps are smaller.

This method is carried out with no change of orientation of the ophthalmic device during the additive manufacturing, and with no change in resolution as such during the method.

Indeed, thanks to the method according to the disclosure, the material does not receive the same quantity of energy on an upskin part compared to a downskin part, and in this method, a sufficient quantity of energy is provided on material which is or will be located at the junction of two successive layers on the second face directed upwards.

In addition, the method according to the disclosure allows to create a sub-layer having a thickness lower than a thickness of the layer which is built.

The above also applies in order to manufacture an ophthalmic device which is built strictly vertically, without tilt, and which has at least a part directed downwards. For instance, that can be a PAL lens on the side of the second face and an a portion of the second face directed downwards, even if other portions of the second face are directed upwards.

In other words, the method according to the disclosure can be carried out only for the manufacturing of a portion of the ophthalmic device.

In another variant, the ophthalmic device is not vertically built but rather horizontally and the method according to the disclosure can be carried out in order to obtain a second face directed downwards with a higher resolution the opposite first face directed upwards.

To be noted that the ophthalmic device can be an ophthalmic lens for spectacles lenses or other devices adapted for a wearer and having ophthalmic properties.

To be noted also that the additive manufacturing method can be carried out according to any existing suitable technology, such as for instance technologies included in the definition given by the reference ISO/ASTM 52900:2021, or corresponding references.

It should be noted more generally that the disclosure is not limited to the examples described and represented.

## Claims

1. Method for additively manufacturing an ophthalmic device (2) having a first face (50), a second face (55) opposite to the first face and an outline joining the first face and the second face, the method comprising additively manufacturing a plurality of layers (3) of a predetermined material in order to obtain the ophthalmic device, each layer being manufactured by projecting and polymerizing at least one image on a surface of a volume of the predetermined material, the first face being directed downwards and the second face being directed upwards; wherein, for at least two successive layers, the method comprises forming at least one image permitting to cure a predetermined thickness of material on the side of the second face directed upwards and another thickness (60) of material on the side of the first face directed downwards.

2. Method according to claim 1, wherein the ophthalmic device (2) is built vertically and in an inclined manner.

3. Method according to one of claims 1 and 2, wherein at least a part of a sub-layer of material is formed substantially at a junction of two successive layers on the side of the first face directed downwards, the sub-layer having a thickness lower than a thickness of the layer which is built.

4. Method according to any one of claims 1 to 3, comprising layering for adding a volume of the predetermined material before each projecting and polymerizing at least one image on a surface of the added volume of the predetermined material, and during the layering, the volume of the predetermined material is the same for each layer.

5. Method according to any one of claims 2 to 4, wherein additively manufacturing a plurality of layers of a predetermined material is made along a stratification axis (S) which is substantially vertical, and the ophthalmic device (2) is built vertically and comprises an optical axis which is distinct to the stratification axis.

6. Method according to claim 5, comprising additively manufacturing a support on which the ophthalmic device is built vertically and in an inclined manner, the support comprising a maintaining face which has a predetermined inclination relative to the stratification axis.

7. Method according to any one of claims 1 to 6, wherein the ophthalmic device is built along a diameter or a profile of the ophthalmic device.

8. Method according to claim any one of claims 1 to 7, comprising forming at least one image permitting to cure the predetermined thickness of material on the side of the second face (55) directed upwards the another thickness (60) of material on the side of the first face (50) directed downwards, and slicing one or a plurality of images.

9. Method according to claim any one of claims 1 to 7, comprising forming at least one image permitting to cure the predetermined thickness of material on the side of the second face (55) directed upwards and the another thickness (60) of material on the side of the first face directed (50) downwards, and deforming a shape of the sliced image or sliced images.

10. Method according to one of claims 8 and 9, wherein a plurality of sliced images are projected sequentially.

11. Method according to one of claims 8 and 9, wherein at least a so-called grayscale image is projected.

12. Method according to any one of claims 1 to 11, comprising varying a polymerization energy during curing.

13. A manufacturing system configured to carry out a method for additively manufacturing an ophthalmic device (2) having a first face (50), a second face (55) opposite to the first face and an outline joining the first face and the second face, additively manufacturing a plurality of layers (3) of a predetermined material in order to obtain the ophthalmic device, each layer being manufactured by projecting and polymerizing at least one image on a surface of a volume of the predetermined material, the first face being directed downwards and the second face being directed upwards; wherein the manufacturing system comprises a projecting and polymerizing apparatus (15) configured for forming, for at least two successive layers, at least one image permitting to cure a predetermined thickness of material on the side of the second face directed upwards and another thickness of material on the side of the first face directed downwards.

14. Manufacturing system according to claims 13, comprising a layering device configured for adding a volume of the predetermined material before the projecting and polymerizing apparatus projects and polymerizes at least one image on a surface of the added volume of the predetermined material

15. Manufacturing system according to one of claims 13 and 14, wherein the projecting and polymerizing apparatus is formed by a digital light processing unit and/or a stereolithography unit including a laser source and a scanning head, and optionally the system comprises a controller configured to form a plurality of sliced images and/or at least a so-called grayscale image and/or to vary a polymerization energy during curing.
